# EUROPEAN PATENT SPECIFICATION

(11) **EP 2 060 494 B1**
(45) Date of publication and mention of the grant of the patent: **18.08.2010**
(21) Application number: 08165698.5
(22) Date of filing: 02.10.2008
(51) Int. Cl.: B65B 35/04, B65B 57/14

(54) **Packet wrapping systems**
Paketumwickelungssysteme
Systèmes de conditionnement de paquets

(43) Date of publication of application: 20.05.2009
(73) Proprietor: Small, Vincent, Southampton Hampshire SO30 2UT (GB); Reeves, Stephen Thomas, Southampton Hampshire SO15 4LE (GB)
(72) Inventor: Small, Vincent, Southampton Hampshire SO30 2UT (GB); Reeves, Stephen Thomas, Southampton Hampshire SO15 4LE (GB)
(74) Representative: Targett, Kenneth Stanley

(56) References cited:
- GB-A- 706 945
- GB-A- 1 020 768
- US-A- 3 121 301

## Description

This invention relates to packet wrapping systems. The invention was conceived for use in a cigarette production line, but it also has other applications.

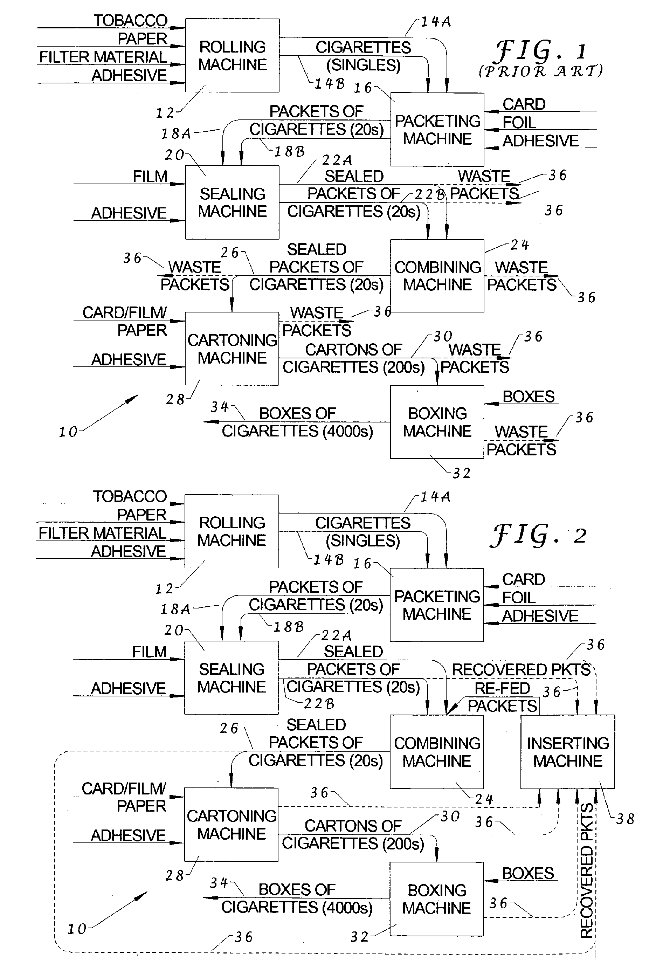

A typical cigarette production line 10 is shown schematically in Figure 1 of the accompanying drawings. Tobacco, cigarette paper, filter material and adhesive are fed to a cigarette rolling machine 12 (or series of machines) which produces cigarettes. The cigarettes are fed by two conveyors 14A,B to a packeting machine 16, together with card, foil and adhesive, and packets are formed around bundles of twenty of the cigarettes. The packets of cigarettes are fed by two conveyors 18A,B to a sealing machine 20, together with film and adhesive, and sealed wrappers are formed around the packets of cigarettes. The sealed packets of cigarettes are fed by two conveyors 22A,B to a combining machine 24. The combining machine 24 combines the two flows of sealed cigarette packets into a single flow which is fed by a conveyor 26 to a cartoning machine 28, together with card, film and/or paper and adhesive. In a known combining machine 24, the packets are dropped from the pair of conveyors 22A,B onto respective stacks, and then packets are fired from the bottom of each stack onto the conveyor 26, with the timing of the firings being controlled in dependence upon various sensors. The cartoning machine 28 forms a carton (or paper wrapper) around groups of ten of the sealed packets. The cartons of cigarettes are then fed by a conveyor 30 to a boxing machine 32, together with cardboard boxes, and the cartons are packed into the boxes, which are output from the production line 10 on a conveyor 34.

A cigarette packaging machine having a buffer is shown, for example, in GB 1 020 768.

A problem with the production line 10 described above is that, in practice, there can be a significant amount of wastage, due for example to faulty machinery, maladjustment of machinery, faulty materials, etc. In particular, sealed packets 36 of cigarettes may depart from the normal flow of the production line at the combining machine 24, cartoning machine 28, boxing machine 32 or the conveyors 22A,B, 26, 30. Many of these packets 36 may be perfectly good and usable. However, making use of these packets 36 presents problems. With some production lines 10, it may be possible to stop the normal flow of the production line 10 and then insert the packets 36 manually onto one of the conveyors 22A,B. However, this has a significant impact on the production rate and it may be more economic to dispose of the packets 36. With other production lines 10, it may be impossible or extremely difficult to insert such packets 36 back into the flow of the production line 10, and so the packets 36 are wasted.

An aim of the present invention, or at least of specific embodiments of it, is to reduce the wastage, or the difficulty in dealing with wastage, of packets in a packet wrapping system.

In accordance with one aspect of the present invention, there is provided a packet wrapping system, such as described above with reference to Figure 1, in which packets in a main flow are dropped intermittently from a conveyor onto a main flow stack and are then fed away from the bottom of the main flow stack. The system of the first aspect of the invention is characterised by a packet inserter having: a magazine for holding additional packets, a release mechanism operable to release such an additional packet from the magazine so that the additional packet drops onto the main flow stack, a sensor for sensing a parameter indicative that a packet is not about to be dropped from the conveyor onto the main flow stack, and a control arrangement for operating the release mechanism in dependence on the sensor so that such an additional packet can be dropped onto the main flow stack when a packet is not about to be dropped from the conveyor onto the main flow stack. The magazine of the packet inserter can therefore be loaded with usable packets that have departed from the main flow and then be re-fed into the main flow automatically without having to halt the main flow.

A second aspect of the invention extends to a such a packet inserter per se.

The system or inserter preferably further includes a second sensor for sensing a parameter indicative of whether or not the main flow stack contains more than a predetermined number of packets, and wherein the control arrangement is arranged to inhibit operation of the release mechanism in dependence on the second sensor when the main flow stack contains more than the predetermined number of packets. The main stack is therefore prevented from overflowing.

The system or inserter preferably further includes a third sensor for sensing a parameter indicative of whether or not the magazine contains any such additional packets, and the control arrangement is arranged to inhibit operation of the release mechanism in dependence on the third sensor when the magazine does not contain any such additional packets. This prevents the packet inserter fruitlessly attempting to insert packets into the main flow when no such packs are available.

The magazine is preferably arranged to hold the additional packets in a magazine stack. In this case, the release mechanism preferably comprises a gate that can be opened to release from the magazine the additional packet that is at the bottom of the magazine stack, and a gripper arrangement that can be activated to prevent the additional packet that is immediately above the bottom packet in the magazine stack from falling. The control arrangement is then arranged to perform a cycle in which the gripper arrangement is activated and the gate is opened to release the bottom packet in the magazine stack; and then the gate is closed and the gripper arrangement is deactivated to allow the magazine stack to fall onto the gate.

In the case where the packets are cuboidal having a thickness less then their width and length, and the main stack extends in the width or length direction of the packets in the main flow, the magazine is preferably arranged to hold the magazine stack such that the magazine stack extends in the thickness direction of the additional packets, and the release mechanism includes a flipping arrangement for flipping such an additional packet that is being released so that it is released in its width or length direction. This reduces the height of the magazine stack and can make it easier to load the magazine with packets. The release mechanism preferably includes a further gate that can be opened to release such an additional packet from the flipping arrangement, in which case the control arrangement is preferably arranged to open the further gate in dependence on the first-mentioned sensor so that such an additional packet can be dropped from the flipping arrangement onto the main flow stack when a packet is not about to be dropped from the conveyor onto the main flow stack.

In the case where packets in a second main flow are dropped intermittently from a second conveyor beneath the first-mentioned conveyor onto a second main flow stack beside the first-mentioned main flow stack and are then fed away from the bottom of the second main flow stack, the packet inserter is preferably arranged to drop such additional packets only onto the first main flow stack. Typically, the first main flow stack will have a greater capacity and be more readily accessible than the second main flow stack.

The packet wrapping system may further include a machine for performing an operation on each packet downstream of the packet inserter, means for detecting whether the operation has already been performed on a packet that has reached the machine, and means for inhibiting the performance again of the operation on a packet which is detected as having already had the operation performed on it. For example, where the machine is arranged to apply a tax stamp to a packet and an additional packet to which a tax stamp has already been applied has been inserted into the main flow, this feature prevents the application of a second tax stamp to the additional packet.

A third aspect of the present invention extends to the use of a packet wrapping system of the first aspect of the invention or a packet inserter of the second aspect of the invention for inserting additional packets of cigarettes into a main flow of packets of cigarettes before groups of the packets of cigarettes are wrapped together.

A specific embodiment of the present invention will now be described, purely by way of example, with reference to the accompanying drawings, in which:
- Figure 1: is a schematic block diagram of a typical cigarette production line;
- Figure 2: is similar to Figure 1, but showing the production line modified to include a acket inserting machine of the embodiment of the invention;
- Figure 3: is a side view of the packet inserting machine;
- Figure 4: is a front view of the machine, viewed in the inclined direction denoted by the arrow 4 in Figure 3;
- Figure 5: is similar to Figure 3, but sectioned on the section line 5-5 shown in Figure 4;
- Figure 6: is similar to Figure 5, but with two gates of the machine each open;
- Figure 7A-7B.: show the packet inserting machine, on a smaller scale, fitted to part of a production line, with the packet inserting machine in a third state and in a fourth state, respectively;
- Figure 8: is a flow diagram of the operation of the packet inserting machine;
- Figure 9A: is similar to Figure 4, but with the machine loaded with packets of cigarettes in a first state; and
- Figures 9B-9D: are similar to Figure 9A, but with the machine in its second to fourth states, respectively.

Referring to Figure 2, a cigarette production line 10 embodying the invention is similar to the production line 10 described above with reference to Figure 1, except that it includes an inserting machine 38 which can be manually loaded with the usable sealed packets 36 of cigarettes that have been recovered from the combining machine 24, cartoning machine 28, boxing machine 32 or the conveyors 22A,B, 26, 30, and which automatically re-feeds the recovered packets 36 into the combining machine 24 along with the packets being fed by the conveyor 22A.

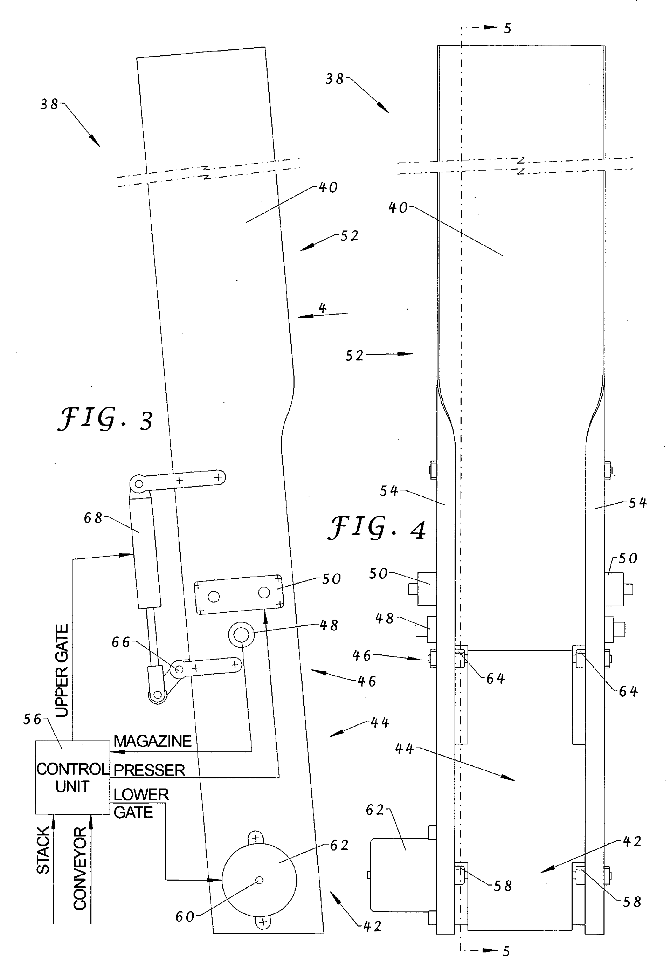

Referring now in more detail to Figures 3 to 6, the inserting machine 38 includes a channel 40 which is inclined slightly to the vertical. The internal cross-section of the channel 40 is slightly larger than the width times the length of the packets of cigarettes with which the inserting machine 38 is to be used. A lower gate 42 is provided at the lower end of the channel 40. A flipping arrangement 44 is provided above the lower gate 42. An upper gate 46 is provided above the flipping arrangement 44. A sensor 48 is provided immediately above the upper gate 46. A presser 50 is provided immediately above the sensor 48. The channel 40 forms a magazine 52 for packets of cigarettes above the upper gate 46. The sides of the channel 40 have in-turned lips 54 extending from the bottom of the channel 40 to a distance above the presser 50 to assist in guiding the packets reliably. The remainder of the channel 40 is un-lipped to facilitate manual loading of the magazine 52 with packets. The inserting machine 38 also includes an electrical control unit 56.

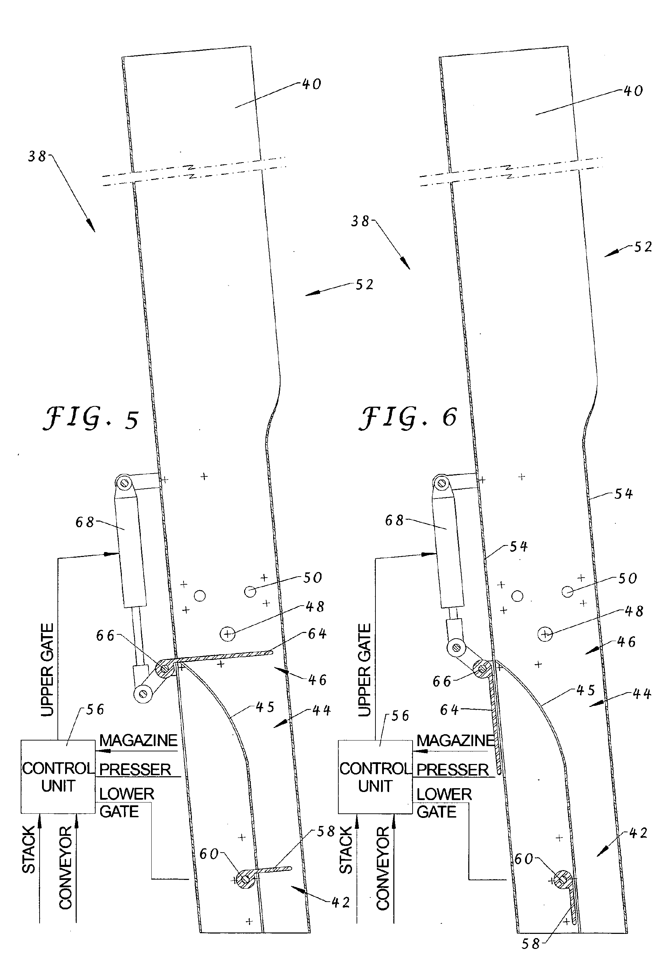

More specifically, the flipping 44 arrangement comprises a curved plate 45 which reduces the available internal cross-section of the channel 40 to slightly larger than the width or length times the thickness of the packets of cigarettes. The lower gate 42 comprises a pair of bars 58 which are mounted on a shaft 60 driven by a motor 62 under control of the control unit 56 for movement between a closed position (as shown in Figure 5) in which the bars 58 project through slots in the curved plate 45 to block the passage of a packet past the lower gate 42, and an open position (as shown in Figure 6) in which the bars 58 are retracted behind the curved plate 45 to allow a packet to pass the lower gate 42. The upper gate 46 comprises a pair of bars 64 which are mounted on a shaft 66 driven by a motor 68 and crank under control of the control unit 56 for movement between a closed position (as shown in Figure 5) in which the bars 64 project through slots in the curved plate 45 and channel 40 to block the passage of a packet past the upper gate 46, and an open position (as shown in Figure 6) in which the bars 64 are retracted behind the curved plate 45 to allow a packet to pass the upper gate 46. The sensor 48 may be any suitable form of sensor, such as an optical sensor, which can detect whether or not a packet is present on the closed upper gate 46 and provide a corresponding signal to the control unit 56. The presser 50 is mounted on one side of the channel 40 and may be any suitable form of device which is arranged under control of the control unit 56 to press the packet which is immediately above the packet on the closed upper gate 46 against the opposite side of the channel 40, or against a corresponding presser 50 on the opposite side of the channel 40, to prevent that packet falling.

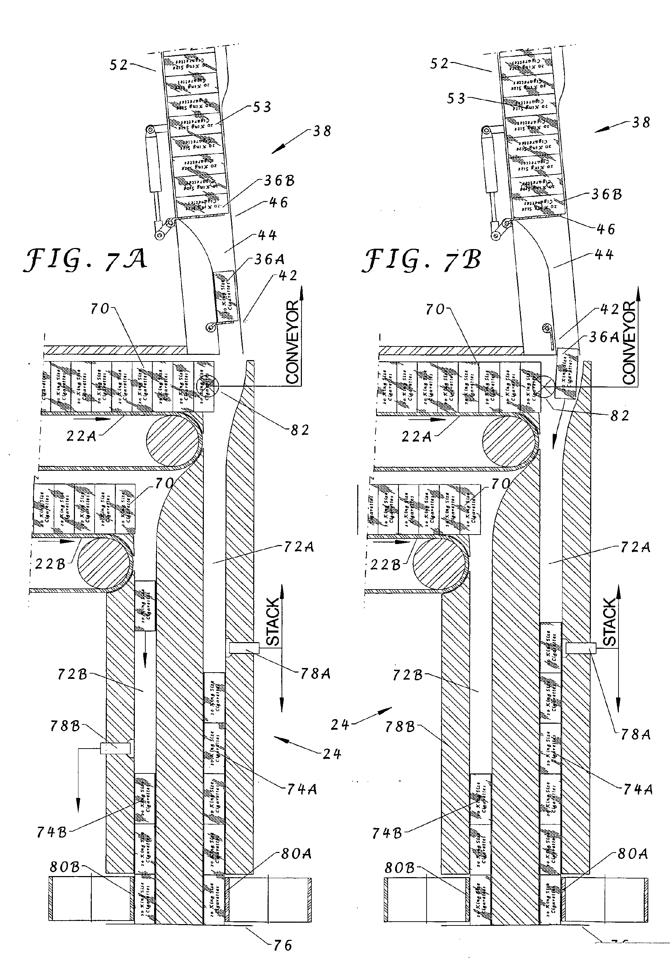

Referring now to Figures 7A and 7B, in a conventional cigarette production line 10, the conveyors 22A,B leading from the sealing machine 20 to the combining machine 24 are arranged one above the other, with the upper conveyor 22A overhanging the lower conveyor 22B. Packets 70 of cigarettes standing on their side edges and travelling on the conveyors 22A,B drop intermittently into respective passageways 72A,B in the combining machine 24 so that stacks 74A,B of the packets 70 of varying height can be formed above a base plate 76 of the combining machine 24. A sensor 78A,B is provided in each passageway 72A,B to detect whether or not the respective stack 74A,B has reached the height of the sensor 78A,B. At the bottom of each passageway 72A,B, a respective belt 80A,B is provided. Each belt 80A,B has a tooth (not shown), or a number of widely spaced teeth, and can be driven intermittently so that the tooth engages the packet 70 at the bottom of the respective stack 74A,B and fires that packet 70 from the stack 74A,B onto the common conveyor 26. The belts 80A,B are driven in dependence upon the signals from the sensors 78A,B and other parameters.

The inserting machine 38 described above with reference to Figures 3 to 6 is added to the conventional arrangement described in the preceding paragraph by mounting the inserting machine 38 above the end of the upper conveyor 22A so that packets 36 released from the lower end of the channel 40 can drop into the passageway 72A. Also, the signal from the sensor 78A is also supplied to the control unit 56. Furthermore, a sensor 82, such as an optical sensor, is placed at the end of the upper conveyor 22A to detect whether a packet 70 is not about to be dropped from the upper conveyor 22A onto the stack 74A (Figure 7B), or whether a packet 70 is about to be dropped soon (Figure 7A). A corresponding signal from the sensor 82 is supplied to the control unit 56.

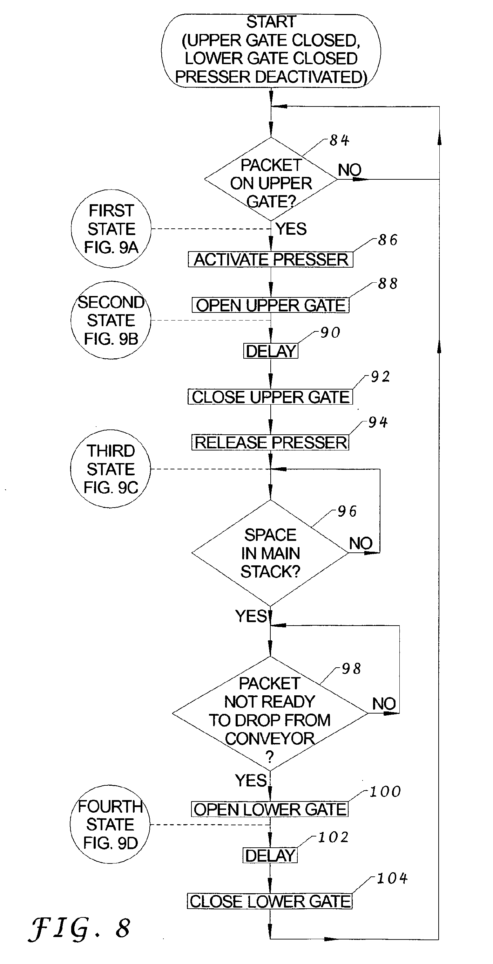

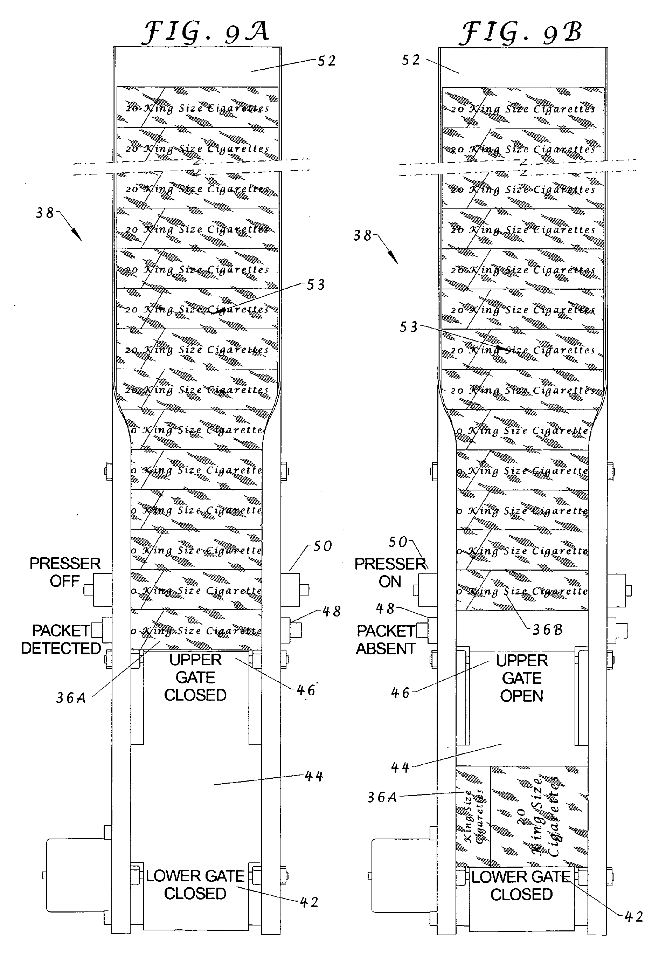

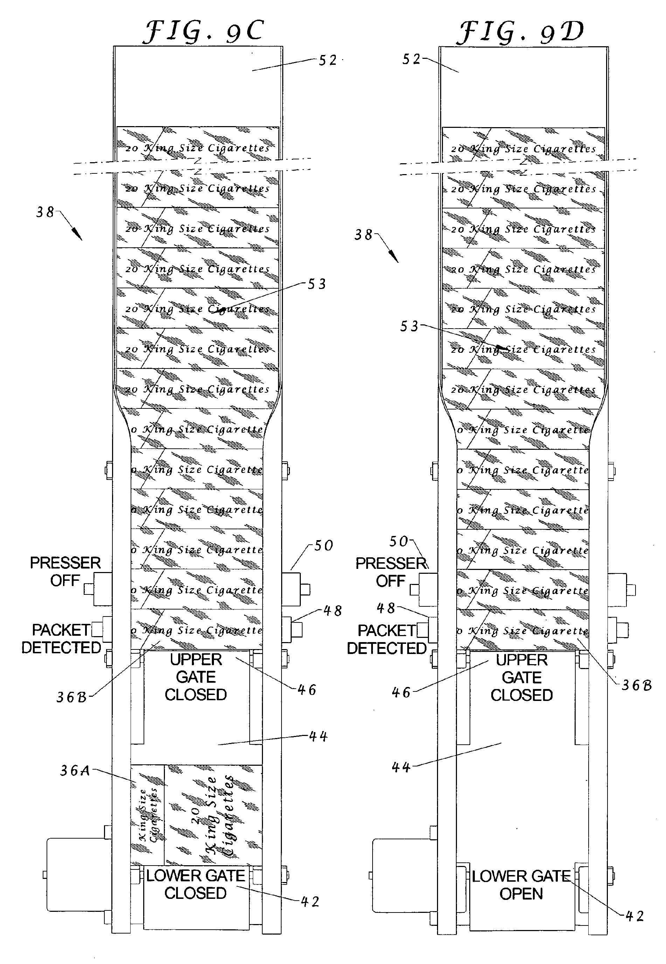

The control unit 56 is arranged, by hard-wiring or by programmed microcontroller, to cause the inserting machine 38 to operate as shown in Figure 8. Assume that the magazine 52 is initially empty. When the control unit is initially switched on, the upper gate 46 and lower gate 42 are closed, and the presser 50 is not activated. In step 84, the control unit 56 checks the signal from the magazine sensor 48 and waits until a packet 36 is detected by that sensor 48. Assume that the magazine 52 is now manually loaded with a stack 53 of packets 36. The system thus attains a "first" state as shown in Figure 9A. The loading of the magazine is detected in step 84, and the control unit 56 then activates the presser 48 in step 86 and opens the upper gate 46 in step 88 so that the packet 36A that was resting on the upper gate 46 passes through the upper gate 46 and is flipped by the flipper arrangement 44 as it falls onto the closed lower gate 42. However, the packet 36B that was immediately above the dropped packet 36A is held in place by the presser 50. The system thus attains a "second" state as shown in Figure 9B. After a short delay in step 90 sufficient to allow the packet 36A to pass through the upper gate 46, the control unit 56 closes the upper gate 46 in step 92 and deactivates the presser 48 in step 94 so that the stack 53 of packets 36 in the magazine 52 drops and the lowermost packet 36B rests on the closed upper gate 46. The system thus attains a "third" state as shown in Figures 7A and 9C. Then, in step 96 the control unit 56 checks the signal from the main stack sensor 78A and waits until a packet 70 or 36 is not detected by that sensor 78A, indicative that there is room in the main stack 74A to add at least two additional packets 70 or 36. Once there is room in the main stack 74A, in step 98 the control unit 56 checks the signal from the conveyor sensor 82 and waits until a packet 70 is not detected by that sensor 82, indicative that a packet 70 has just fallen from the conveyor 22A onto the stack 74A (or that there are no packets 70 on the conveyor 22A). Once such a packet is not detected, in step 100 the control unit 56 opens the lower gate 42 so that the packet 36A that was resting on the lower gate 42 falls into and down the passageway 72A, as shown in Figure 7B, onto the stack 74A. The system thus attains a "fourth" state as shown in Figures 9D. After a short delay in step 102 sufficient to allow the packet 36A to pass through the lower gate 42, the control unit 56 closes the lower gate 42 in step 104 and the procedure loops back to step 84. The inserting machine 38 will therefore continue to insert packets 36 from the magazine stack 53 into the main stack 72A as and when space is available in the main stack 72A and insertion of the packets of the packets 36 will not interfere with the packets 70 dropping from the conveyor 22A until such time as the magazine 52 becomes empty.

Many modifications and developments may be made to the embodiment of the invention described above.

For example, instead of feeding into the main flow between the sealing machine 20 and the combining machine 24, the inserting machine 38 may instead feed into the main flow between the packeting machine 16 and the sealing machine 20. In this case, in order to prevent a recovered packet 36 to which a sealed wrapper has already been applied being covered with another sealed wrapper, the sealing machine 20 may be provided with a sensor to detect whether an incoming packet has already been sealed with a wrapper, and if so to prevent the sealing machine 20 applying a second wrapper.

Also, a tax stamp applying machine may be provided between the packeting machine 16 and the sealing machine 20. In this case, the inserting machine 38 may be arranged to feed into the main flow between the packeting machine 16 and the stamp applying machine. In order to prevent a recovered packet 36 to which a tax stamp has already been applied being stamped with a second tax stamp, the stamp applying machine may be provided with a sensor to detect whether an incoming packet has already been stamped, and if so to prevent the stamp applying machine applying a second stamp.

The stamp-applying and sealing operations may, of course, be performed by a single machine.

It should be noted that the embodiment of the invention has been described above purely by way of example and that many other modifications and developments may be made thereto within the scope of the present invention.

## Claims

1. A packet wrapping system (10) in which packets (70) in a main flow are dropped intermittently from a conveyor (22A) onto a main flow stack (74A) and are then fed away from the bottom of the main flow stack, the system including a packet inserter (38) having: a magazine (52) for holding additional packets (36), a release mechanism (42,44,46) operable to release such an additional packet from the magazine s that the additional packet drops onto the main flow stack, **characterised in that** the packet inserter further has a sensor (82) for sensing a parameter indicative that a packet is not about to be dropped from the conveyor onto the main flow stack, and a control arrangement (56) for operating the release mechanism in dependence on the sensor so that such an additional packet can be dropped onto the main flow stack when a packet is not about to be dropped from the conveyor onto the main flow stack.

2. A packet inserter (38) for use with a packet wrapping system (10) in which packets (70) in a main flow are dropped intermittently from a conveyor (22A) onto a main flow stack (74A) and are then fed away from the bottom of the main flow stack, the packet inserter having: a magazine (52) for holding additional packets (36), a release mechanism (42,44,46) operable to release such an additional packet from the magazine so that the additional packet drops onto the main flow stack, **characterised in** further having a sensor (82) for sensing a parameter indicative that a packet is not about to be dropped from the conveyor onto the main flow stack, and a control arrangement (56) for operating the release mechanism in dependence on the sensor so that such an additional packet can be dropped onto the main flow stack when a packet is not about to be dropped from the conveyor onto the main flow stack.

3. A packet wrapping system or packet inserter as claimed in claim 1 or 2, further including a second sensor (78A) for sensing a parameter indicative of whether or not the main flow stack contains more than a predetermined number of packets, and wherein the control arrangement is arranged to inhibit operation of the release mechanism in dependence on the second sensor when the main flow stack contains more than the predetermined number of packets.

4. A packet wrapping system or packet inserter as claimed in any preceding claim, further including a third sensor (48) for sensing a parameter indicative of whether or not the magazine contains any such additional packets, and wherein the control arrangement is arranged to inhibit operation of the release mechanism in dependence on the third sensor when the magazine does not contain any such additional packets.

5. A packet wrapping system or packet inserter as claimed in any preceding claim, wherein: the magazine is arranged to hold the additional packets in a magazine stack (53); the release mechanism comprises a gate (46) that can be opened to release from the magazine the additional packet (36A) that is at the bottom of the magazine stack, and a gripper arrangement (50) that can be activated to prevent the additional packet (36B) that is immediately above the bottom packet in the magazine stack from falling; and the control arrangement is arranged to perform a cycle in which the gripper arrangement is activated and the gate is opened to release the bottom packet in the magazine stack; and then the gate is closed and the gripper arrangement is deactivated to allow the magazine stack to fall onto the gate.

6. A packet wrapping system as claimed in claim 5, for packets that are cuboidal having a thickness less then their width and length, wherein: the main stack extends in the width or length direction of the packets in the main flow; the magazine is arranged to hold the magazine stack such that the magazine stack extends in the thickness direction of the additional packets; and the release mechanism includes a flipping arrangement (24) for flipping such an additional packet that is being released so that it is released in its width or length direction.

7. A packet wrapping system as claimed in claim 6, wherein: the release mechanism includes a further gate (46) that can be opened to release such an additional packet from the flipping arrangement; and the control arrangement is arranged to open the further gate in dependence on the first-mentioned sensor so that such an additional packet can be dropped from the flipping arrangement onto the main flow stack when a packet is not about to be dropped from the conveyor onto the main flow stack.

8. A packet wrapping system as claimed in any preceding claim, wherein: packets in a second main flow are dropped intermittently from a second conveyor (22B) beneath the first-mentioned conveyor onto a second main flow stack (72B) beside the first-mentioned main flow stack and are then fed away from the bottom of the second main flow stack; and the packet inserter is arranged to drop such additional packets only onto the first main flow stack.

9. A packet wrapping system as claimed in any preceding claim, further including a machine for performing an operation on each packet downstream of the packet inserter, means for detecting whether the operation has already been performed on a packet that has reached the machine, and means for inhibiting the performance again of the operation on a packet which is detected as having already had the operation performed on it.

10. The use of a packet wrapping system or packet inserter as claimed in any preceding claim for inserting additional packets of cigarettes into a main flow of packets of cigarettes before groups of the packets of cigarettes are wrapped together.

## Patentansprüche

1. Schachteleinwickelsystem (10), in dem Schachteln (70) in einem Hauptfluss intermittierend von einer Fördereinrichtung (22A) auf einen Hauptflussstapel (74A) geworfen werden und dann von der Unterseite des Hauptflussstapels wegbefördert werden, wobei das System einen Schachteleinsetzer (38) aufweist, der enthält: ein Magazin (52), um zusätzliche Schachteln (36) zu halten, einen Freigabemechanismus (42, 44, 46), der betreibbar ist, um eine solche zusätzliche Schachtel aus dem Magazin freizugeben, damit die zusätzliche Schachtel auf den Hauptflussstapel fällt, **dadurch gekennzeichnet, dass** der Schachteleinsetzer ferner einen Sensor (82), um einen Parameter zu detektieren, der angibt, dass eine Schachtel momentan nicht von der Fördereinrichtung auf den Hauptflussstapel fällt, und eine Steueranordnung (56), um den Freigabemechanismus in Abhängigkeit von dem Sensor zu betreiben, enthält, so dass eine solche zusätzliche Schachtel auf den Hauptflussstapel geworfen werden kann, wenn eine Schachtel momentan nicht von der Fördereinrichtung auf den Hauptflussstapel fällt.

2. Schachteleinsetzer (38) für die Verwendung mit einem Schachteleinwickelsystem (10), in dem Schachteln (70) in einem Hauptfluss intermittierend von einer Fördereinrichtung (22A) auf einen Hauptflussstapel (74A) geworfen werden und dann von der Unterseite des Hauptflussstapels wegbefördert werden, wobei der Schachteleinsetzer enthält: ein Magazin (52) zum Halten zusätzlicher Schachteln (36), einen Freigabemechanismus (42, 44, 46), der betreibbar ist, um eine solche zusätzliche Schachtel aus dem Magazin freizugeben, damit die zusätzliche Schachtel auf den Hauptflussstapel fällt, **dadurch gekennzeichnet, dass** er ferner einen Sensor (82), um einen Parameter zu detektieren, der angibt, dass eine Schachtel momentan nicht von der Fördereinrichtung auf den Hauptflussstapel geworfen wird, und eine Steueranordnung (56), um den Freigabemechanismus in Abhängigkeit von dem Sensor zu betreiben, enthält, so dass eine zusätzliche Schachtel auf den Hauptflussstapel geworfen werden kann, wenn eine Schachtel momentan nicht von der Fördereinrichtung auf den Hauptflussstapel geworfen wird.

3. Schachteleinwickelsystem oder Schachteleinsetzer nach Anspruch 1 oder 2, ferner mit einem zweiten Sensor (78A), um einen Parameter zu detektieren, der angibt, ob der Hauptflussstapel mehr als eine vorgegebene Anzahl von Schachtelen enthält, wobei die Steueranordnung dazu ausgelegt ist, den Betrieb des Freigabemechanismus in Abhängigkeit von dem zweiten Sensor zu verhindern, wenn der Hauptflussstapel mehr als die vorgegebene Anzahl von Schachtelen enthält.

4. Schachteleinwickelsystem oder Schachteleinsetzer nach einem vorhergehenden Anspruch, ferner mit einem dritten Sensor (48), um einen Parameter zu detektieren, der angibt, ob das Magazin irgendwelche derartigen zusätzlichen Schachteln enthält, wobei die Steueranordnung dazu ausgelegt ist, den Betrieb des Freigabemechanismus in Abhängigkeit von dem dritten Sensor zu verhindern, wenn das Magazin keine derartigen zusätzlichen Schachteln enthält.

5. Schachteleinwickelsystem oder Schachteleinsetzer nach einem vorhergehenden Anspruch, wobei: das Magazin dazu ausgelegt ist, die zusätzlichen Schachteln in einem Magazinstapel (53) zu halten; der Freigabemechanismus ein Tor (46), das geöffnet werden kann, um die zusätzliche Schachtel (36A), die sich an der Unterseite des Magazinstapels befindet, aus dem Magazin freizugeben, und eine Greiferanordnung (50), die aktiviert werden kann, um zu verhindern, dass die zusätzliche Schachtel (36B), die sich unmittelbar über der untersten Schachtel in dem Magazinstapel befindet, herabfällt, enthält; und die Steueranordnung dazu ausgelegt ist, einen Zyklus auszuführen, in dem die Greiferanordnung aktiviert wird und das Tor geöffnet wird, um die untere Schachtel in dem Magazinstapel freizugeben; und dann das Tor geschlossen wird und die Greiferanordnung deaktiviert wird, um zuzulassen, dass der Magazinstapel auf das Tor fällt.

6. Schachteleinwickelsystem nach Anspruch 5 für Schachteln, die quaderförmig sind und eine Dicke besitzen, die kleiner als ihre Breite und ihre Länge ist, wobei: sich der Hauptstapel in Breiten- oder Längsrichtung der Schachteln in dem Hauptfluss erstreckt; das Magazin dazu ausgelegt ist, den Magazinstapel in der Weise zu halten, dass sich der Magazinstapel in der Dickenrichtung der zusätzlichen Schachteln erstreckt; und der Freigabemechanismus eine Kippanordnung (24) aufweist, um eine solche zusätzliche Schachtel, die momentan freigegeben wird, zu kippen, so dass sie in ihrer Breiten- oder Längsrichtung freigegeben wird.

7. Schachteleinwickelsystem nach Anspruch 6, wobei: der Freigabemechanismus ein weiteres Tor (46) enthält, das geöffnet werden kann, um eine solche zusätzliche Schachtel aus der Kippanordnung freizugeben; und die Steueranordnung dazu ausgelegt ist, das weitere Tor in Abhängigkeit von dem erstgenannten Sensor zu öffnen, so dass eine solche zusätzliche Schachtel von der Kippanordnung auf den Hauptflussstapel fallen kann, wenn eine Schachtel momentan nicht von der Fördereinrichtung auf den Hauptflussstapel fällt.

8. Schachteleinwickelsystem nach einem vorhergehenden Anspruch, wobei: Schachteln in einem zweiten Hauptfluss intermittierend von einer zweiten Fördereinrichtung (22B) unter der erstgenannten Fördereinrichtung auf einen zweiten Hauptflussstapel (72B) neben dem erstgenannten Hauptflussstapel geworfen werden und dann von der Unterseite des zweiten Hauptflussstapels wegbefördert werden; und der Schachteleinsetzer dazu ausgelegt ist, solche zusätzlichen Schachteln nur auf den ersten Hauptflussstapel zu werfen.

9. Schachteleinwickelsystem nach einem vorhergehenden Anspruch, das ferner eine Maschine, um einen Vorgang an jeder Schachtel stromabseitig des Schachteleinsetzers auszuführen, Mittel, um zu detektieren, ob der Vorgang an einer Schachtel, die die Maschine erreicht hat, bereits ausgeführt worden ist, und Mittel, um die erneute Ausführung des Vorgangs an einer Schachtel, für die detektiert worden ist, dass der Vorgang an ihr bereits ausgeführt worden ist, zu verhindern, enthält.

10. Verwendung eines Schachteleinwickelsystems oder eines Schachteleinsetzers nach einem vorhergehenden Anspruch, um zusätzliche Zigarettenschachteln in einen Hauptfluss von Zigarettenschachteln einzusetzen, bevor Gruppen der Zigarettenschachteln zusammen eingewickelt werden.

## Revendications

1. Système d'emballage de paquets (10) dans lequel des paquets (70) dans un flux principal tombent de manière intermittente d'un transporteur (22A) sur une pile de flux principal (74A) et sont ensuite emmenés depuis le bas de la pile du flux principal, ce système comprenant un dispositif d'insertion de paquet (38) ayant : un magasin (52) pour contenir des paquets supplémentaires (36), un mécanisme de dégagement (42, 44, 46) pouvant être actionné pour dégager un tel paquet supplémentaire du magasin de façon à ce que ce paquet supplémentaire tombe sur la pile du flux principal, **caractérisé en ce que** le dispositif d'insertion de paquet a en outre un capteur (82) pour détecter un paramètre indicatif qu'un paquet n'est pas sur le point de tomber du transporteur sur la pile du flux principal, et un dispositif de commande (56) pour actionner le mécanisme de dégagement en dépendance du capteur de façon à ce qu'un tel paquet supplémentaire puisse tomber sur la pile du flux principal lorsqu'un paquet n'est pas sur le point de tomber du transporteur sur la pile du flux principal.

2. Dispositif d'insertion de paquet (38) destiné à être utilisé avec un système d'emballage de paquets (10), dans lequel les paquets (70) dans un flux principal tombent de manière intermittente d'un transporteur (22A) sur une pile du flux principal (74A) et sont ensuite emmenés depuis le bas de la pile du flux principal, ce dispositif d'insertion de paquet ayant : un magasin (52) pour contenir des paquets supplémentaires (36), un mécanisme de dégagement (42, 44, 46) pouvant être actionné de façon à dégager un tel paquet supplémentaire du magasin de manière à ce que ce paquet supplémentaire tombe sur la pile du flux principal, **caractérisé en ce qu'**il a en outre un capteur (82) pour détecter un paramètre indicatif qu'un paquet n'est pas sur le point de tomber du transporteur sur la pile du flux principal, et un dispositif de commande (56) pour actionner le mécanisme de dégagement en dépendance du capteur de façon à ce qu'un tel paquet supplémentaire puisse tomber sur la pile du flux principal lorsqu'un paquet n'est pas sur le point de tomber du transporteur sur la pile du flux principal.

3. Système d'emballage de paquets ou dispositif d'insertion de paquet selon la revendication 1 ou 2, comprenant en outre un deuxième capteur (78A) pour détecter un paramètre indicatif de si oui ou non la pile du flux principal contient plus qu'un nombre prédéterminé de paquets, et dans lequel le dispositif de commande est agencé de façon à empêcher l'actionnement du mécanisme de dégagement en dépendance du deuxième capteur lorsque la pile du flux principal contient plus que le nombre prédéterminé de paquets.

4. Système d'emballage de paquets ou dispositif d'insertion de paquet selon l'une quelconque des revendications précédentes, comprenant en outre un troisième capteur (48) pour détecter un paramètre indicatif de si oui ou non le magasin contient de tels paquets supplémentaires, et dans lequel le dispositif de commande est agencé de façon à empêcher l'actionnement du mécanisme de dégagement en dépendance du troisième capteur lorsque le magasin ne contient pas de tels paquets supplémentaires.

5. Système d'emballage de paquets ou dispositif d'insertion de paquet selon l'une quelconque des revendications précédentes, dans lequel : le magasin est agencé de façon à contenir les paquets supplémentaires dans une pile de magasin (53) ; le mécanisme de dégagement comprend une porte (46) qui peut être ouverte de façon à dégager du magasin le paquet supplémentaire (36A) qui est en bas de la pile du magasin, et un dispositif de préhension (50) qui peut être activé de façon à empêcher le paquet supplémentaire (36B) qui est juste au-dessus du paquet en bas de la pile du magasin de tomber ; et le dispositif de commande est agencé de façon à exécuter un cycle dans lequel de dispositif de préhension est activé et la porte est ouverte de manière à dégager le paquet en bas de la pile du magasin ; puis la porte est fermée et le dispositif de préhension est désactivé de façon à permettre à la pile du magasin de tomber sur la porte.

6. Système d'emballage de paquets selon la revendication 5, pour des paquets qui sont cuboïdes, ayant une épaisseur inférieure à leur largeur et à leur longueur, dans lequel : la pile principale s'étend dans la direction de la largeur ou de la longueur des paquets dans le flux principal ; le magasin est agencé de façon à contenir la pile du magasin de manière à ce que la pile du magasin s'étende dans la direction de l'épaisseur des paquets supplémentaires ; et le mécanisme de dégagement comprend un dispositif de basculement (24) pour faire basculer un tel paquet supplémentaire qui est en train d'être dégagé de façon à ce qu'il soit dégagé dans la direction de sa largeur ou de la longueur.

7. Système d'emballage de paquets selon la revendication 6, dans lequel : le mécanisme de dégagement comprend une autre porte (46) qui peut être ouverte de façon à dégager un tel paquet supplémentaire du dispositif de basculement ; et le dispositif de commande est agencé de façon à ouvrir cette autre porte en dépendance du capteur mentionné en premier de façon à ce qu'un tel paquet supplémentaires puisse tomber du dispositif de basculement sur la pile du flux principal lorsqu'un paquet n'est pas sur le point de tomber du transporteur sur la pile du flux principal.

8. Système d'emballage de paquets selon l'une quelconque des revendications précédentes, dans lequel des paquets dans un deuxième flux principal tombent de manière intermittente d'un deuxième transporteur (22B) en dessous du transporteur mentionné en premier sur une deuxième pile de flux principal (72B) à côté de la pile du flux principal mentionnée en premier et sont ensuite emmenés depuis le bas de la deuxième pile du flux principal ; et le dispositif d'insertion de paquet est agencé de façon à faire tomber de tels paquets supplémentaires seulement sur la première pile du flux principal.

9. Système d'emballage de paquets selon l'une quelconque des revendications précédentes, comprenant en outre une machine pour effectuer une opération sur chaque paquet en aval du dispositif d'insertion de paquet, un moyen pour détecter si cette opération a déjà été effectuée sur un paquet qui a atteint la machine, et un moyen pour empêcher la nouvelle exécution de cette opération sur un paquet qui est détecté comme ayant déjà eu l'opération exécutée sur lui.

10. Utilisation d'un système d'emballage de paquets ou d'un dispositif d'insertion de paquet selon l'une quelconque des revendications précédentes pour insérer des paquets de cigarettes supplémentaires dans un flux principal de paquets de cigarettes avant que des groupes de ces paquets de cigarettes ne soient enveloppés ensemble.
